# EUROPEAN PATENT SPECIFICATION

(11) **EP 2 722 232 B1**
(45) Date of publication and mention of the grant of the patent: **06.12.2017**
(21) Application number: 13188876.0
(22) Date of filing: 16.10.2013
(51) Int. Cl.: B60R 11/00, H04B 1/08, H04B 1/38

(54) **On-vehicle electronic device and its operation control method**
Elektronische Vorrichtung an Bord eines Fahrzeugs und deren Betriebssteuerungsverfahren
Dispositif électronique embarqué et son procédé de commande de fonctionnement

(30) Priority: 19.10.2012 JP 2012231638
(43) Date of publication of application: 23.04.2014
(73) Proprietor: Alpine Electronics, Inc., Tokyo (JP)
(72) Inventor: Kajimoto, Tomomi, Iwaki, Fukushima 970-1192 (JP); Yokota, Rie, Iwaki, Fukushima 970-1192 (JP); Sano, Noriyuki, Iwaki, Fukushima 970-1192 (JP); Matsumoto, Nobuo, Iwaki, Fukushima 970-1192 (JP); Kimura, Atsushi, Iwaki, Fukushima 970-1192 (JP); Kurasawa, Shintaro, Iwaki, Fukushima 970-1192 (JP)
(74) Representative: Schmitt-Nilson Schraud Waibel Wohlfrom Patentanwälte Partnerschaft mbB

(56) References cited:
- EP-A2- 1 283 132
- EP-A2- 2 181 897
- JP-A- 2005 206 007

## Description

The present invention relates to an on-vehicle electronic device and its operation control method. In particular, the present invention relates to an on-vehicle electronic device and its operation control method suitable for attachment/detachment of a panel.

Hitherto, an on-vehicle electronic device such as an on-vehicle navigation system has employed, as a theft-prevention measure, a detaching/attaching mechanism (what is called a detaching mechanism), with which a front panel is detachable from and attachable to a front chassis (a nose chassis) arranged near the front surface of the main unit of the on-vehicle electronic device.

In addition, hitherto, an on-vehicle electronic device with such a detaching/attaching mechanism has employed a motorized panel mechanism, which is capable of setting an angle of the front chassis with respect to the front surface of the main unit of the on-vehicle electronic device to an angle appropriate for operation of operation buttons arranged on the front panel and the like by electrically tilting the front chassis.

For example, Japanese Patent 4,242,788 discloses a technology as an existing technology regarding an on-vehicle electronic device with such a detaching/attaching mechanism and such a motorized panel mechanism.

As illustrated in Fig. 3 and the like of Japanese Patent No. 4,242,788, in an existing on-vehicle electronic device with the above-described detaching/attaching mechanism and motorized panel mechanism, it is determined whether or not a front panel is attached to a front chassis in a state in which the front chassis is fully closed. In the case where it is determined that the front panel is attached to the front chassis, the main unit of the existing on-vehicle electronic device is started up and makes the front chassis tilt (open).

Thus, with such a structure, it is necessary to attach the front panel to the front chassis in the state in which the front chassis is fully closed. As a result, there has been an issue in that attaching of the front panel to the front chassis is difficult since hands and fingers of a user who holds the outer edge of the front panel touch an instrument panel portion and the like of the vehicle positioned around the front chassis.

EP 1 283 132 A2 discloses an electronic apparatus including an electronic apparatus main unit, a front panel attached at the front of the electronic apparatus main unit detachably from the electronic apparatus main unit. The electronic apparatus has a driving section provided at the electronic apparatus main unit to drive the front panel, a main-unit-side communications element to perform signal communications to/from the front panel, a battery provided at the front panel for storing power fed from the electronic apparatus main unit, a panel-side communications element to perform signal communications to/from the main-unit-side communications element. The electronic apparatus has a controller for controlling the driving section in order for the driving section to drive the front panel in a state where recharging of the front panel is allowed in case the charge voltage of the battery has dropped below a preset reference value.

According to the present invention there is provided an on-vehicle electronic device and its operation control method, the usability of which is improved by making attachment of a panel easier using a simple method while the cost is reduced or maintained almost the same.

According to an aspect of the present invention, there is provided an on-vehicle electronic device that includes a front chassis, a drive mechanism, a power supply unit, a drive control unit, a panel attaching detection unit, and a start-up control unit. The front chassis is arranged near a front surface of the main unit of the on-vehicle electronic device such that the front chassis is capable of tilting and from which and to which a panel is detachable/attachable. The drive mechanism makes the front chassis tilt with respect to the front surface of the main unit of the on-vehicle electronic device. The power supply unit performs power supply to the main unit of the on-vehicle electronic device. The drive control unit performs drive control on the drive mechanism such that the front chassis is tilted from an initial position, in which the front chassis lies along the front surface of the main unit of the on-vehicle electronic device, to a panel attachment waiting position, in which the front chassis forms a certain angle with the front surface of the main unit of the on-vehicle electronic device, the drive control being triggered by starting of the power supply performed by the power supply unit. The panel attaching detection unit detects whether or not the panel is attached to the front chassis, after the front chassis has been tilted to or while the front chassis is being tilted to the panel attachment waiting position by drive control performed by the drive control unit. The start-up control unit, in the case where the panel attaching detection unit has detected that the panel is attached to the front chassis, starts up the main unit of the on-vehicle electronic device and makes the on-vehicle electronic device enter a state in which the main unit of the on-vehicle electronic device is usable and, in the case where the panel attaching detection unit has detected that the panel is not attached to the front chassis, puts the main unit of the on-vehicle electronic device on standby until the panel attaching detection unit detects that the panel has been attached to the front chassis at which point the main unit of the on-vehicle electronic device starts up.

According to another aspect of the present invention, there is provided an operation control method for an on-vehicle electronic device that includes a front chassis that is arranged near a front surface of the main unit of the on-vehicle electronic device such that the front chassis is capable of tilting and from which and to which a panel is detachable/attachable, and a drive mechanism that makes the front chassis tilt with respect to the front surface of the main unit of the on-vehicle electronic device. The operation control method includes a first step of starting power supply to the main unit of the on-vehicle electronic device; a second step of performing drive control on the drive mechanism such that the front chassis is tilted from an initial position, in which the front chassis lies along the front surface of the main unit of the on-vehicle electronic device, to a panel attachment waiting position, in which the front chassis forms a certain angle with the front surface of the main unit of the on-vehicle electronic device, the drive control being triggered by starting of the power supply in the first step; a third step of detecting whether or not the panel is attached to the front chassis, after the front chassis has been tilted to or while the front chassis is being tilted to the panel attachment waiting position in the second step; in the case where it has been detected that the panel is attached to the front chassis in the third step, a fourth step of starting up the main unit of the on-vehicle electronic device and making the on-vehicle electronic device enter a state in which the main unit of the on-vehicle electronic device is usable; and in the case where it has been detected that the panel is not attached to the front chassis in the third step, a fifth step of putting the main unit of the on-vehicle electronic device on standby until it is detected that the panel has been attached to the front chassis at which point the main unit of the on-vehicle electronic device starts up.

According to the present invention, since it is possible to put the front chassis on standby in order to allow attachment of a panel after the front chassis has been tilted to a panel attachment waiting position from an initial position after power supply to the main unit of the on-vehicle electronic device had started, attachment of the panel to the front chassis may be made easier using a simple method.

In the on-vehicle electronic device according to the present invention, the certain angle may be a preset angle, an angle formed when the on-vehicle electronic device was last used, or an angle formed when attachment of the panel was last performed. Likewise, in the operation control method for an on-vehicle electronic device according to the present invention, the certain angle may be a preset angle, an angle formed when the on-vehicle electronic device was last used, or an angle formed when attachment of the panel was last performed.

With such a structure, additional degrees of freedom may be provided in the design in terms of the panel attachment waiting position of the front chassis.

Furthermore, in the on-vehicle electronic device according to the present invention, the power supply unit may start power supply upon detecting at least one of turning on of an accessory switch of the vehicle, opening of a door of the vehicle, unlocking of a door of the vehicle, and a user approaching the vehicle. Likewise, in the operation control method for an on-vehicle electronic device according to the present invention, in the first step, power supply may be started upon detection of at least one of turning on of an accessory switch of the vehicle, opening of a door of the vehicle, unlocking of a door of the vehicle, and a user approaching the vehicle.

According to the present invention, additional degrees of freedom may be provided in the design of the way in which power supply to the main unit of the on-vehicle electronic device is triggered.

Furthermore, in the on-vehicle electronic device according to the present invention, a warning generation unit that outputs a warning to prompt a user to attach the panel to the front chassis may further be included, the warning being constituted by a voice message, a warning beep, or both, in the case where it has been detected that the panel is not attached to the front chassis within a predetermined period of time after the front chassis has been tilted to the panel attachment waiting position. Likewise, in the operation control method for an on-vehicle electronic device according to the present invention, a sixth step of outputting a warning to prompt a user to attach the panel to the front chassis may further be included, the warning being constituted by a voice message, a warning beep, or both, in the case where, in the third step, it has been detected that the panel is not attached to the front chassis within a predetermined period of time after the front chassis has been tilted to the panel attachment waiting position.

According to the present invention, attachment of a panel may be prevented from being forgotten by outputting a warning.

According to the present invention, the usability may be improved by making attachment of a panel easier using a simple method while the cost is reduced or maintained almost the same.

### BRIEF DESCRIPTION OF THE DRAWINGS

Figs. 1A and 1B are schematic diagrams of an on-vehicle electronic device according to a first embodiment of the present invention;
Fig. 2 is a block diagram of the on-vehicle electronic device according to the first embodiment;
Fig. 3 is a flowchart of an operation control method for the on-vehicle electronic device according to the first embodiment of the present invention;
Fig. 4 is a block diagram of an on-vehicle electronic device according to a second embodiment of the present invention; and
Fig. 5 is a flowchart of an operation control method for the on-vehicle electronic device according to the second embodiment of the present invention.

### First embodiment

### On-Vehicle Electronic Device

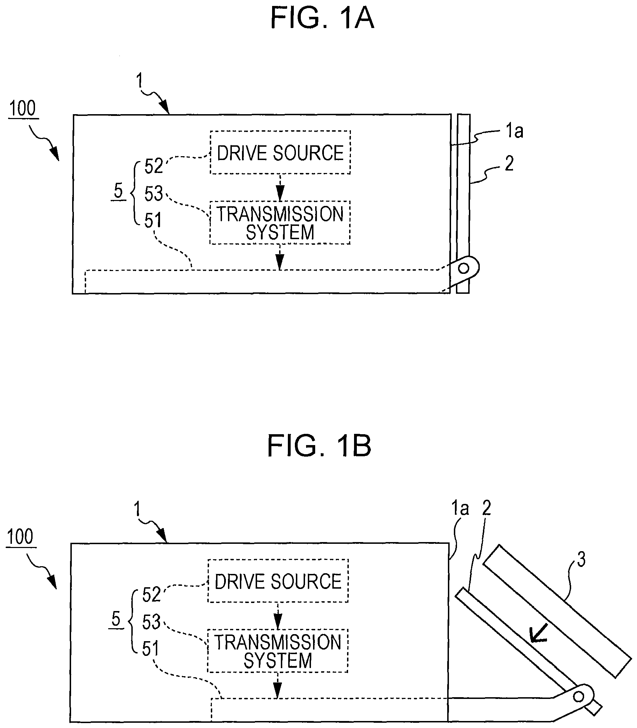

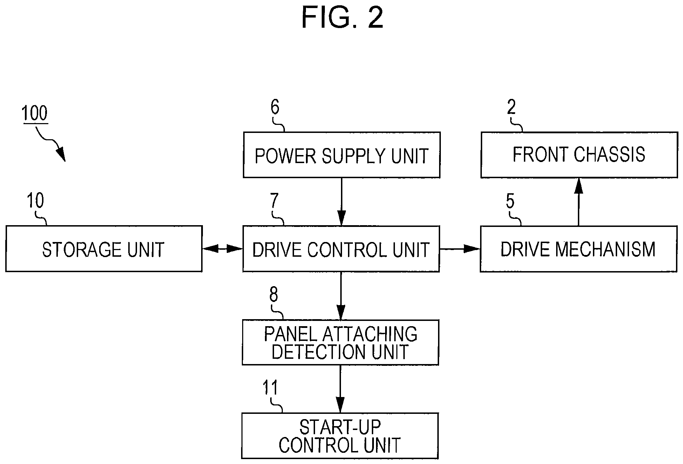

In the following, an on-vehicle electronic device according to a first embodiment of the present invention will be described with reference to Figs. 1A, 1B, and 2.

As illustrated in Figs. 1A and 1B, an on-vehicle electronic device 100 in the first embodiment includes a front chassis 2 having a plate-like shape and arranged near a front surface 1a of a main unit 1 of the on-vehicle electronic device 100. The front chassis 2 includes, for example, a detaching/attaching mechanism that provides easy mating and unmating of a front panel 3 illustrated in Fig. 1B, an electrode terminal used to supply power to drive the front panel 3, and the like, the detaching/attaching mechanism and the electrode terminal being not illustrated. In addition, the front panel 3 includes a display unit, various operation buttons, a mechanism that engages the detaching/attaching mechanism of the front chassis 2, an electrode terminal that receives power supplied from the electrode terminal of the front chassis 2, and the like. Note that an existing mechanism may be applied as the detaching/attaching mechanism.

As illustrated in Figs. 1A and 1B, the on-vehicle electronic device 100 includes a drive mechanism 5 that makes the front chassis 2 tilt, that is, that makes the front chassis 2 move so as to form a certain angle with the front surface 1a of the main unit 1. As illustrated in Figs. 1A and 1B, a bottom portion of the front chassis 2 is coupled to a front end of the drive mechanism 5 in a rotatable manner. The drive mechanism 5 may include a slide member 51, a drive source 52, and a transmission system 53. The slide member 51 is capable of sliding in a fore-and-aft manner (in the side to side directions in Figs. 1A and 1B). The drive source 52 includes a motor that drives the slide member 51. The transmission system 53 includes a plurality of gears used to convert driving force of the drive source 52 into sliding movement of the slide member 51. In this case, the front chassis 2 is angled in accordance with the length of a projected portion of the slide member 51 from the front surface 1a of the main unit 1. Note that a technology described in, for example, Japanese Unexamined Patent Application Publication No. 2000-40882 or Japanese Unexamined Patent Application Publication No. 2000-76838 may be applied to the drive mechanism 5. Moreover, when needed, an existing guide mechanism may be provided on the front surface 1a of the main unit 1 in order to guide tilting of the front chassis 2.

The main unit 1 is covered by a housing having a rectangular parallelepiped shape. A navigation unit, a disc drive unit that plays back CDs or DVDs, an amplifier that amplifies sound signals, and the like are contained in the housing. None of the navigation unit, the disc drive unit, and the amplifier is illustrated.

Furthermore, as illustrated in Fig. 2, the on-vehicle electronic device 100 includes a power supply unit 6 as a power supply device. Power supply in the on-vehicle electronic device 100 is performed by the power supply unit 6. The power supply unit 6 may include, for example, an electric circuit, a control unit, and the like. The electric circuit is connected to a battery of a vehicle. The control unit electrically controls, by a switching operation or the like, power supply from the battery via the electric circuit in the on-vehicle electronic device 100. In addition, the power supply unit 6 may start power supply upon detecting at least one of turning on of an accessory (ACC) switch of the vehicle, opening of a door of the vehicle, unlocking of a door of the vehicle, and a user approaching the vehicle. Note that, in this case, it is necessary that the power supply unit 6 includes an approach detection sensor that is electrically and directly or wirelessly connected to an ACC power supply circuit that detects turning on of ACC of the vehicle, a door sensor that detects opening of a door of the vehicle, a door lock sensor that detects whether a door of the vehicle is being in a locked state or an unlocked state, a smart-key detection circuit that detects a user approaching the vehicle, and the like.

Furthermore, as illustrated in Fig. 2, the on-vehicle electronic device 100 includes a drive control unit 7 as a drive control device. When the power supply unit 6 starts power supply, the drive control unit 7 performs drive control on the drive mechanism 5 such that the front chassis 2 is tilted from an initial position to a panel attachment waiting position. At the initial position, the front chassis 2 lies along the front surface 1a of the main unit 1 (the front chassis 2 is arranged almost parallel to the front surface 1a). At the panel attachment waiting position, the front chassis 2 forms a certain angle with the front surface 1a. Such drive control is performed without performing determination as to whether or not the front panel 3 is attached to the front chassis 2. Here, Fig. 1A illustrates a state in which the front chassis 2 is positioned upright at the initial position. In contrast, Fig. 1B illustrates a state in which the front chassis 2 is tilted to the panel attachment waiting position and the front chassis 2 forms a certain angle with the front surface 1a. Here, a certain angle that defines the panel attachment waiting position may be an angle preset by a manufacturer or a user, an angle formed when the on-vehicle electronic device 100 was last used, or an angle formed when attachment of the front panel 3 was last performed. It is desirable that data regarding such a certain angle (for example, the data may be data regarding the number of revolutions of the motor included in the drive source 52 corresponding to a certain angle from the initial position) be stored in a storage unit 10 constituted by a semiconductor memory and the like, in a state in which the drive control unit 7 is capable of reading the data. In addition, the drive control unit 7 may perform drive control on the drive mechanism 5 by controlling power supply to the drive mechanism 5 (drive source 52), the power supply being performed by the power supply unit 6. Furthermore, the drive control unit 7 may be realized by executing a program (a operation control program) that realizes functions of the drive control unit 7 and is stored in a read-only memory (ROM) or the like, the execution being performed by a processing unit (a computer) such as a central processing unit (CPU). In this case, the processing unit may perform processing using a work area such as a random-access memory (RAM).

Moreover, as illustrated in Fig. 2, the on-vehicle electronic device 100 includes a panel attaching detection unit 8 as a panel attaching detection device. The panel attaching detection unit 8 detects whether or not the front panel 3 is attached to the front chassis 2 after the front chassis 2 has been tilted to or while the front chassis 2 is being tilted to the panel attachment waiting position by drive control performed by the drive control unit 7. The panel attaching detection unit 8 may detect that the front panel 3 has been attached to the front chassis 2, by electrically detecting that power is being successfully supplied to the front panel 3. Alternatively, the panel attaching detection unit 8 may detect that the front panel 3 has been attached to the front chassis 2, by using a mechanical switch or an optical switch that performs output switching when the front panel 3 is attached to the front chassis 2. Moreover, the panel attaching detection unit 8 may be realized by executing a program that realizes functions of the panel attaching detection unit 8, the execution being performed by a processing unit. Note that when the panel attaching detection unit 8 detects whether or not the front panel 3 is attached to the front chassis 2 while front chassis 2 is being tilted to the panel attachment waiting position, it is possible to start up the on-vehicle electronic device 100 faster, which will be described later.

Furthermore, as illustrated in Fig. 2, the on-vehicle electronic device 100 includes a start-up control unit 11 as a start-up control device. In the case where the panel attaching detection unit 8 has detected that the front panel 3 is attached to the front chassis 2, the start-up control unit 11 starts up the on-vehicle electronic device 100 and makes the on-vehicle electronic device 100 enter a state in which the on-vehicle electronic device 100 is usable. Here, "usable" refers to a state in which the main function of the on-vehicle electronic device 100 is usable by performing input (a button operation or the like), output (image display or the like), or both via the front panel 3. Moreover, the position of the front chassis 2 when the on-vehicle electronic device 100 starts up may be the panel attachment waiting position, a position whose angle with respect to the front surface 1a is smaller than that of the panel attachment waiting position, or a position whose angle with respect to the front surface 1a is larger than that of the panel attachment waiting position. In contrast, in the case where the panel attaching detection unit 8 has detected that the front panel 3 is not attached to the front chassis 2, the start-up control unit 11 puts the on-vehicle electronic device 100 on standby until the panel attaching detection unit 8 detects that the front panel 3 has been attached to the front chassis 2 at which point the on-vehicle electronic device 100 starts up. The start-up control unit 11 may be realized by executing a program that realizes functions of the start-up control unit 11, the execution being performed by a processing unit.

With such a structure, after supplying of power in the on-vehicle electronic device 100 has been started and the front chassis 2 has been tilted from the initial position to the panel attachment waiting position, it is possible to put the front chassis 2 on standby in order to allow attachment of the front panel 3 to the front chassis 2. Thus, the front panel 3 may be easily attached to the front chassis 2 at the panel attachment waiting position. That is, since the front chassis 2 forms an angel with the front surface 1a of the main unit 1, an issue tends not to come up such that hands and fingers of a user who holds the outer edge of the front panel 3 touch an instrument panel portion of the vehicle positioned around the front chassis 2, which makes it difficult to attach the front panel 3 to the front chassis 2.

### Operation Control Method

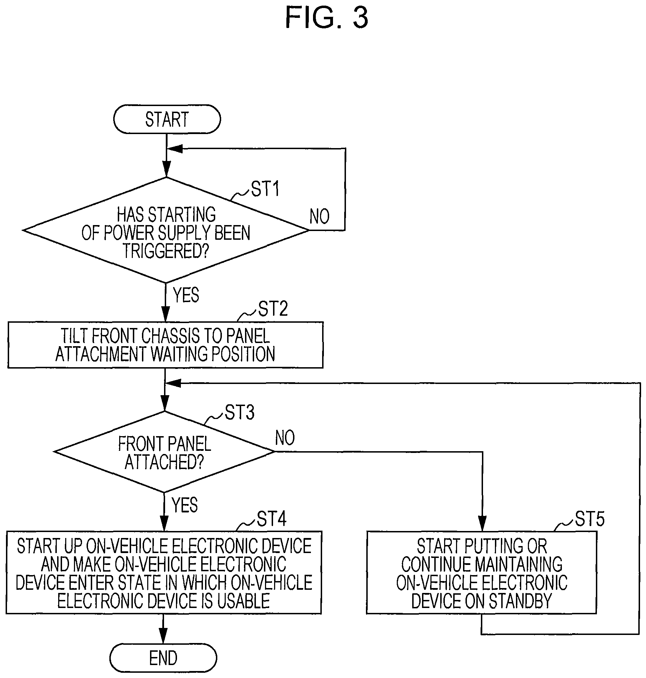

Next, an operation control method for an on-vehicle electronic device according to the first embodiment of the present invention will be described with reference to Fig. 3, the first embodiment employing the on-vehicle electronic device 100.

Note that, in the initial state, the front chassis 2 is at the initial position as illustrated in Fig. 1A.

In step 1 (ST1) in Fig. 3, it is determined in the initial state whether or not the power supply unit 6 has triggered starting of power supply. As described above, starting of power supply may be triggered upon detection of at least one of turning on of an accessory (ACC) switch of the vehicle, opening of a door of the vehicle, unlocking of a door of the vehicle, and a user approaching the vehicle. If YES in step 1 (ST1), the procedure proceeds to step 2 (ST2). If NO in step 1 (ST1), the procedure returns to step 1 (ST1).

Next, in step 2 (ST2), the drive control unit 7 performs drive control on the drive mechanism 5 on the basis of the operation control program and makes the front chassis 2 move from the initial position to the panel attachment waiting position illustrated in Fig. 1B.

Next, in step 3 (ST3), the panel attaching detection unit 8 detects whether or not the front panel 3 is attached to the front chassis 2 after the front chassis 2 has been moved to or while the front chassis 2 is being moved to the panel attachment waiting position in step 2 (ST2). If it is detected that the front panel 3 is attached to the front chassis 2 in step 3 (ST3) (that is, in the case of YES), the procedure proceeds to step 4(ST4). If a negative detection result is obtained in step 3 (ST3), that is, it is detected that the front panel 3 is not attached to the front chassis 2 (that is, in the case of NO), the procedure proceeds to step 5 (ST5).

Here, when the procedure proceeds to step 4 (ST4), on the basis of the operation control program, the start-up control unit 11 starts up the on-vehicle electronic device 100 and makes the on-vehicle electronic device enter a state in which the on-vehicle electronic device 100 is usable, and completes processing.

In contrast, when the procedure proceeds to step 5 (ST5), on the basis of the operation control program, the start-up control unit 11 starts putting or continues maintaining the on-vehicle electronic device 100 on standby before start-up, and the procedure returns to step 3 (ST3). Here, in the case where step 5 (ST5) is executed for the first time, processing for putting the on-vehicle electronic device 100 on standby before start-up is "started" in step 5 (ST5). In contrast, in the case where the procedure returns to step 3 (ST3) and step 5 (ST5) has already been executed at least once, processing for maintaining the on-vehicle electronic device 100 on standby before start-up is "continued" in step 5 (ST5).

### Second Embodiment

### On-Vehicle Electronic Device

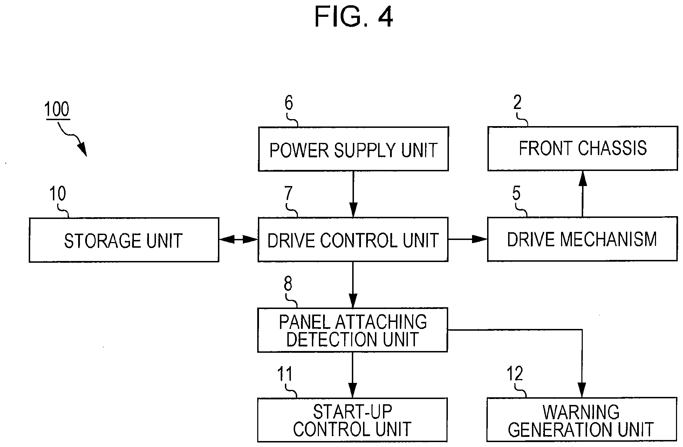

Next, an on-vehicle electronic device according to a second embodiment of the present invention will be described only on a difference between the first embodiment and the second embodiment with reference to Fig. 4.

As illustrated in Fig. 4, the difference between the on-vehicle electronic device 100 according to the first embodiment and an on-vehicle electronic device 100 according to the second embodiment is that the on-vehicle electronic device 100 according to the second embodiment includes a warning generation unit 12, as a warning generation device.

In the case where the panel attaching detection unit 8 has detected that the front panel 3 is not attached to the front chassis 2 within a predetermined period of time after the front chassis 2 has been tilted to the panel attachment waiting position (in other words, from starting of putting of the on-vehicle electronic device 100 on standby before start-up), the warning generation unit 12 outputs a warning to prompt a user to attach the front panel 3 to the front chassis 2. Such a warning may be at least one of a voice message such as "please attach a panel to the front chassis" and a simple warning beep without a message. Preferably, a warning is output via a sound output unit, not illustrated, such as a speaker. Furthermore, the warning generation unit 12 may be realized by executing a program that realizes functions of the warning generation unit 12, the execution being performed by a processing unit.

With such a structure, the on-vehicle electronic device 100 may help a user not to forget to attach the front panel 3 to the front chassis 2 by outputting a warning.

### Operation Control Method

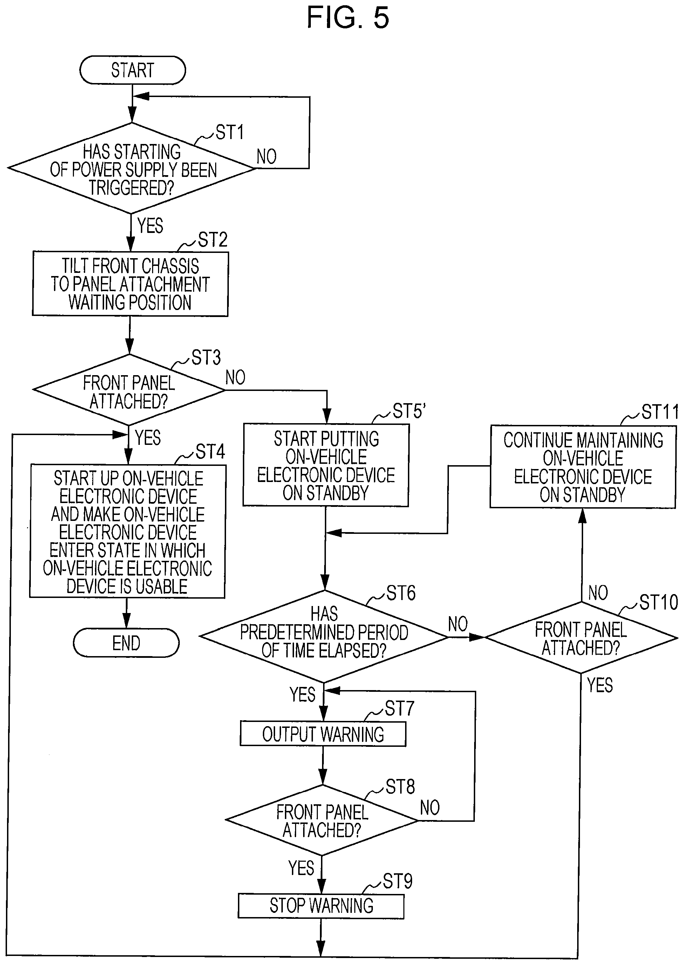

Next, an operation control method for the on-vehicle electronic device according to the second embodiment of the present invention will be described only on a difference between the first embodiment and the second embodiment with reference to Fig. 5.

As illustrated in Fig. 5, the difference between the operation control method according to the first embodiment and the operation control method according to the second embodiment is that step 5' (ST5') and steps 6 (ST6) to 11 (ST11) are executed instead of step 5 (ST5) illustrated in Fig. 3.

That is, in step 5' (ST5'), the start-up control unit 11 starts putting the on-vehicle electronic device 100 on standby before start-up on the basis of the operation control program, and the procedure proceeds to step 6 (ST6).

Next, in step 6 (ST6), the start-up control unit 11 determines whether or not a predetermined period of time has elapsed. If YES in step 6 (ST6), the procedure proceeds to step 7 (ST7). If NO in step 6 (ST6), the procedure proceeds to step 10 (ST10).

Here, processing in and after step 7 (ST7) will be first described. First, in step 7 (ST7), the warning generation unit 12 outputs a warning.

Next, in step 8 (ST8), the panel attaching detection unit 8 detects whether or not the front panel 3 is attached to the front chassis 2. If it is detected that the front panel 3 is attached to the proofing printer 2 in step 8 (ST8) (in the case of YES), the procedure proceeds to step 9 (ST9). If a negative detection result is obtained in step 8 (ST8) (in the case of NO), the procedure returns to step 7 (ST7) and outputting of the warning continues.

Next, in step 9 (ST9), the warning generation unit 12 stops the warning and the procedure proceeds to step 4 (ST4).

Next, processing in and after step 10 (ST10) will be described. First, in step 10 (ST10), the panel attaching detection unit 8 detects whether or not the front panel 3 is attached to the front chassis 2. If it is detected that the front panel 3 is attached to the front chassis 2 in step 10 (ST10) (in the case of YES), the procedure proceeds to step 4 (ST4). If a negative detection result is obtained in step 10 (ST10) (in the case of NO), the procedure proceeds to step 11 (ST11).

Next, in step 11 (ST11), the start-up control unit 11 continues maintaining the on-vehicle electronic device 100 on standby before start-up on the basis of the operation control program, and the procedure returns to step 6 (ST6).

Note that the present invention is not limited to the above-described embodiments. A variety of modifications and changes may be made without departing from the scope of the present invention.

For example, in order to easily detach the front panel 3 from the front chassis 2 while the front chassis 2 is in a tilted state after the on-vehicle electronic device 100 is used, the drive control unit 7 may hold the front chassis 2 for a predetermined period of time at a position to which the front chassis 2 has been tilted even after driving of the on-vehicle electronic device 100 is commanded to stop, without immediately returning the front chassis 2 to the initial position. The position to which the front chassis 2 has been tilted may be the panel attachment waiting position described above.

In addition, in the above-described embodiments, as a specific unit that makes the front chassis 2 tilt to the panel attachment waiting position, the drive control unit 7 performs drive control on the drive mechanism 5 in accordance with a certain angle prestored for the front chassis 2. However, in addition to this, for example, a sensor is provided that optically detects that the front chassis 2 has been tilted to the panel attachment waiting position, and the drive control unit 7 may perform drive control on the drive mechanism 5 until the front chassis 2 reaches a position detected by the sensor.

## Claims

1. An on-vehicle electronic device (100) that includes a front chassis (2) that is arranged near a front surface (1a) of the main unit (1) of the on-vehicle electronic device (100) such that the front chassis (2) is capable of tilting and from which and to which a panel (3) is detachable/attachable, and
a drive mechanism (5) that makes the front chassis (2) tilt with respect to the front surface (1a) of the main unit (1) of the on-vehicle electronic device (100), the on-vehicle electronic device (100) comprising:
a power supply unit (6) that performs power supply to the main unit (1) of the on-vehicle electronic device (100);
a drive control unit (7) that performs drive control on the drive mechanism such that the front chassis (2) is tilted from an initial position, in which the front chassis (2) lies along the front surface (1a) of the main unit (1) of the on-vehicle electronic device (100), to a panel attachment waiting position, in which the front chassis (2) forms an angle with the front surface (1a) of the main unit (1) of the on-vehicle electronic device (100), the drive control being triggered to tilt the front chassis by starting of the power supply performed by the power supply unit (6);
a panel attaching detection unit (8) that detects whether or not the panel (3) is attached to the front chassis (2), after the front chassis (2) has been tilted to or while the front chassis (2) is being tilted to the panel attachment waiting position by drive control performed by the drive control unit (7); and
a start-up control unit (11) that, in the case where the panel attaching detection unit (8) has detected that the panel (3) is attached to the front chassis (2), starts up the main unit (1) of the on-vehicle electronic device (100) and makes the on-vehicle electronic device (100) enter a state in which the main unit (1) of the on-vehicle electronic device (100) is usable and that, in the case where the panel attaching detection unit (8) has detected that the panel (3) is not attached to the front chassis (2), puts the main unit (1) of the on-vehicle electronic device (100) on standby until the panel attaching detection unit (8) detects that the panel (3) has been attached to the front chassis (2) at which point the main unit (1) of the on-vehicle electronic device (100) starts up.

2. The on-vehicle electronic device (100) according to Claim 1, wherein the angle is a preset angle, an angle formed when the on-vehicle electronic device (100) was last used, or an angle formed when attachment of the panel (3) was last performed.

3. The on-vehicle electronic device (100) according to Claim 1 or 2, wherein the power supply unit (6) starts power supply upon detecting at least one of turning on of an accessory switch of the vehicle, opening of a door of the vehicle, unlocking of a door of the vehicle, and a user approaching the vehicle.

4. The on-vehicle electronic device (100) according to any one of Claims 1 to 3, further comprising a warning generation unit (12) that outputs a warning to prompt a user to attach the panel (3) to the front chassis (2), the warning being constituted by a voice message, a warning beep, or both, in the case where it has been detected that the panel (3) is not attached to the front chassis (2) within a predetermined period of time after the front chassis (2) has been tilted to the panel attachment waiting position.

5. An operation control method for an on-vehicle electronic device (100) that includes a front chassis (2) that is arranged near a front surface (1a) of the main unit (1) of the on-vehicle electronic device (100) such that the front chassis (2) is capable of tilting and from which and to which a panel (3) is detachable/attachable, and
a drive mechanism (5) that makes the front chassis (2) tilt with respect to the front surface (1a) of the main unit (1) of the on-vehicle electronic device (100), the operation control method comprising:
a first step (ST1, ST2) of starting power supply to the main unit (1) of the on-vehicle electronic device (100); and performing drive control on the drive mechanism such that the front chassis (2) is tilted from an initial position, in which the front chassis (2) lies along the front surface (1a) of the main unit (1) of the on-vehicle electronic device (100), to a panel attachment waiting position, in which the front chassis (2) forms a certain angle with the front surface (1a) of the main unit (1) of the on-vehicle electronic device (100), the drive control being triggered by starting of the power supply;
a second step (ST3) of detecting whether or not the panel (3) is attached to the front chassis (2), after the front chassis (2) has been tilted to or while the front chassis (2) is being tilted to the panel attachment waiting position in the first step (ST1, ST2);
in the case where it has been detected that the panel (3) is attached to the front chassis (2) in the second step (ST3), a third step (ST4) of starting up the main unit (1) of the on-vehicle electronic device (100) and making the on-vehicle electronic device (100) enter a state in which the main unit (1) of the on-vehicle electronic device (100) is usable; and
in the case where it has been detected that the panel (3) is not attached to the front chassis (2) in the second step (ST3), a fourth step (ST5, ST5', ST11) of putting the main unit (1) of the on-vehicle electronic device (100) on standby until it is detected that the panel (3) has been attached to the front chassis (2) at which point the main unit (1) of the on-vehicle electronic device (100) starts up.

6. The operation control method according to Claim 5, wherein the certain angle is a preset angle, an angle formed when the on-vehicle electronic device (100) was last used, or an angle formed when attachment of the panel (3) was last performed.

7. The operation control method according to Claim 5 or 6, wherein, in the first step, power supply is started upon detection of at least one of turning on of an accessory switch of the vehicle, opening of a door of the vehicle, unlocking of a door of the vehicle, and a user approaching the vehicle.

8. The operation control method according to any one of Claims 5 to 7, further comprising a fifth step (ST7) of outputting a warning to prompt a user to attach the panel (3) to the front chassis (2), the warning being constituted by a voice message, a warning beep, or both, in the case where, in the second step (ST3), it has been detected that the panel (3) is not attached to the front chassis (2) within a predetermined period of time after the front chassis (2) has been tilted to the panel attachment waiting position.

## Patentansprüche

1. An Bord eines Fahrzeugs vorgesehene elektronische Vorrichtung (100), die ein vorderes Chassis (2) aufweist, das nahe einer vorderen Fläche (1a) der Haupteinheit (1) der bordeigenen elektronischen Vorrichtung (100) derart angeordnet ist, dass sich das vordere Chassis (2) neigen lässt, und von dem bzw. an dem sich eine Blende (3) abnehmen/anbringen lässt, und
einen Antriebsmechanismus (5), der das vordere Chassis (2) gegenüber der vorderen Fläche (1a) der Haupteinheit (1) der bordeigenen elektronischen Vorrichtung (100) zum Neigen veranlasst, wobei die bordeigene elektronische Vorrichtung (100) Folgendes aufweist:
eine Stromversorgungseinheit (6), die eine Stromzufuhr zu der Haupteinheit (1) der bordeigenen elektronischen Vorrichtung (100) ausführt;
eine Antriebssteuereinheit (7), die eine Antriebssteuerung an dem Antriebsmechanismus ausführt, so dass das vordere Chassis (2) von einer Ausgangsposition, in der das vordere Chassis (2) entlang der vorderen Fläche (1a) der Haupteinheit (1) der bordeigenen elektronischen Vorrichtung (100) angeordnet ist, in eine Blendenbefestigungs-Warteposition geneigt wird, in der das vordere Chassis (2) mit der vorderen Fläche (1a) der Haupteinheit (1) der bordeigenen elektronischen Vorrichtung (100) einen Winkel bildet, wobei die Antriebssteuerung durch Starten der von der Stromversorgungseinheit (6) ausgeführten Stromzufuhr zum Neigen des vorderen Chassis (2) veranlasst wird;
eine Blendenbefestigungs-Erfassungseinheit (8), die feststellt, ob die Blende (3) an dem vorderen Chassis (2) angebracht ist oder nicht, nachdem oder während das vordere Chassis (2) durch eine von der Antriebssteuereinheit (7) ausgeführte Antriebssteuerung in die Blendenbefestigungs-Warteposition geneigt wurde bzw. geneigt wird; und
eine Hochfahr-Steuereinheit (11), die in dem Fall, in dem die Blendenbefestigungs-Erfassungseinheit (8) festgestellt hat, dass die Blende (3) an dem vorderen Chassis (2) angebracht ist, die Haupteinheit (1) der bordeigenenen elektronischen Vorrichtung (100) hochfährt und die bordeigene elektronische Vorrichtung (100) in einen Zustand bringt, in dem die Haupteinheit (1) der bordeigenen elektronischen Vorrichtung (100) nutzbar ist, und in dem Fall, in dem die Blendenbefestigungs-Erfassungseinheit (8) festgestellt hat, dass die Blende (3) nicht an dem vorderen Chassis (2) angebracht ist, die Haupteinheit (1) der bordeigenen elektronischen Vorrichtung (100) in den Standby-Modus bringt, bis die Blendenbefestigungs-Erfassungseinheit (8) feststellt, dass die Blende (3) an dem vorderen Chassis (2) angebracht worden ist, wobei die Haupteinheit (1) der bordeigenen elektronischen Vorrichtung (100) an dieser Stelle hochfährt.

2. Bordeigene elektronische Vorrichtung (100) nach Anspruch 1,
wobei es sich bei dem Winkel um einen vorgegebenen Winkel, einen bei der letzten Nutzung der bordeigenen elektronischen Vorrichtung (100) gebildeten Winkel oder um einen bei der letzten Anbringung der Blende (3) gebildeten Winkel handelt.

3. Bordeigene elektronische Vorrichtung (100) nach Anspruch 1 oder 2,
wobei die Stromversorgungseinheit (6) die Stromzufuhr beim Erfassen von mindestens einem von dem Einschalten eines Zusatzschalters des Fahrzeugs, dem Öffnen einer Tür des Fahrzeugs, der Entriegelung einer Tür des Fahrzeugs und einem sich dem Fahrzeug nähernden Nutzer startet.

4. Bordeigene elektronische Vorrichtung (100) nach einem der Ansprüche 1 bis 3,
die ferner eine Warnungs-Erzeugungseinheit (12) aufweist, die eine Warnung abgibt, um einen Nutzer zum Anbringen der Blende (3) an dem vorderen Chassis (2) zu veranlassen, wobei die Warnung durch eine Sprachnachricht, einen Warnton oder beides gebildet wird, wenn festgestellt worden ist, dass die Blende (3) nach dem Neigen des vorderen Chassis (2) in die Blendenbefestigungs-Warteposition nicht innerhalb einer vorbestimmten Zeitdauer an dem vorderen Chassis (2) angebracht ist.

5. Betriebssteuerungsverfahren für eine an Bord eines Fahrzeugs vorgesehene elektronische Vorrichtung (100), die ein vorderes Chassis (2) aufweist, das nahe einer vorderen Fläche (1a) der Haupteinheit (1) der bordeigenen elektronischen Vorrichtung (100) derart angeordnet ist, dass sich das vordere Chassis (2) neigen lässt, und von dem bzw. an dem sich eine Blende (3) abnehmen/anbringen lässt, und
einen Antriebsmechanismus (5), der das vordere Chassis (2) gegenüber der vorderen Fläche (1a) der Haupteinheit (1) der bordeigenen elektronischen Vorrichtung (100) zum Neigen veranlasst, wobei das Betriebssteuerungsverfahren aufweist:
einen ersten Schritt (ST1, ST2) zum Starten der Stromzufuhr zu der Haupteinheit (1) der bordeigenen elektronischen Vorrichtung (100); und Ausführen einer Antriebssteuerung an dem Antriebsmechanismus, so dass das vordere Chassis (2) von einer Ausgangsposition, in der das vordere Chassis (2) entlang der vorderen Fläche (1a) der Haupteinheit (1) der bordeigenen elektronischen Vorrichtung (100) angeordnet ist, in eine Blendenbefestigungs-Warteposition geneigt wird, in der das vordere Chassis (2) mit der vorderen Fläche (1a) der Haupteinheit (1) der bordeigenen elektronischen Vorrichtung (100) einen bestimmten Winkel bildet, wobei die Antriebssteuerung durch Starten der Stromzufuhr ausgelöst wird;
einen zweiten Schritt (ST3) zum Erfassen, ob die Blende (3) an dem vorderen Chassis (2) angebracht ist oder nicht, nachdem oder während das vordere Chassis (2) in dem ersten Schritt (ST1, ST2) in die Blendenbefestigungs-Warteposition geneigt worden ist bzw. geneigt wird;
in dem Fall, in dem festgestellt wird, dass die Blende (3) in dem zweiten Schritt (ST3) an dem vorderen Chassis (2) angebracht ist, einen dritten Schritt (ST4) zum Hochfahren der Haupteinheit (1) der bordeigenen elektronischen Vorrichtung (100) und Verbringen der bordeigenen elektronischen Vorrichtung (100) in einen Zustand, in dem die Haupteinheit (1) der bordeigenen elektronischen Vorrichtung (100) nutzbar ist; und
in dem Fall, in dem festgestellt wird, dass die Blende (3) in dem zweiten Schritt nicht an dem vorderen Chassis (2) angebracht ist, einen vierten Schritt (ST5, ST5', ST 11) zum Versetzen der Haupteinheit (1) der bordeigenen elektronischen Vorrichtung (100) in einen Standby-Modus, bis festgestellt wird, dass die Blende (3) an dem vorderen Chassis (2) angebracht ist, wobei an dieser Stelle die Haupteinheit (1) der bordeigenen elektronischen Vorrichtung (100) hochfährt.

6. Betriebssteuerungsverfahren nach Anspruch 5,
wobei es sich bei dem Winkel um einen vorgegebenen Winkel, einen bei der letzten Nutzung der bordeigenen elektronischen Vorrichtung (100) gebildeten Winkel oder um einen bei der letzten Anbringung der Blende (3) gebildeten Winkel handelt.

7. Betriebssteuerungsverfahren nach Anspruch 5 oder 6,
bei dem in dem ersten Schritt die Stromzufuhr beim Erfassen von mindestens einem von dem Einschalten eines Zusatzschalters des Fahrzeugs, dem Öffnen einer Tür des Fahrzeugs, der Entriegelung einer Tür des Fahrzeugs und einem sich dem Fahrzeug nähernden Nutzer gestartet wird.

8. Betriebssteuerungsverfahren nach einem der Ansprüche 5 bis 7,
das ferner einen fünften Schritt (ST7) aufweist, in dem eine Warnung abgegeben wird, um einen Nutzer zum Anbringen der Blende (3) an dem vorderen Chassis (2) zu veranlassen, wobei die Warnung durch eine Sprachnachricht, einen Warnton oder beides gebildet wird, wenn in dem zweiten Schritt (ST3) festgestellt worden ist, dass die Blende (3) nach dem Neigen des vorderen Chassis (2) in die Blendenbefestigungs-Warteposition nicht innerhalb einer vorbestimmten Zeitdauer an dem vorderen Chassis (2) angebracht ist.

## Revendications

1. Dispositif électronique à bord d'un véhicule (100) qui inclut un châssis avant (2) qui est agencé près d'une surface avant (1a) de l'unité principale (1) du dispositif électronique à bord du véhicule (100) de telle manière que le châssis avant (2) est inclinable et duquel et sur lequel un panneau (3) peut être détaché/attaché, et
un mécanisme d'entraînement (5) qui fait s'incliner le châssis avant (2) par rapport à la surface avant (1a) de l'unité principale (1) du dispositif électronique à bord du véhicule (100), le dispositif électronique à bord du véhicule (100) comprenant :
une unité d'alimentation en courant (6) qui réalise l'alimentation en courant de l'unité principale (1) du dispositif électronique à bord du véhicule (100) ;
une unité de commande d'entraînement (7) qui réalise une commande d'entraînement sur le mécanisme d'entraînement de telle manière que le châssis avant (2) est incliné depuis une position initiale, dans laquelle le châssis avant (2) repose le long de la surface avant (1a) de l'unité principale (1) du dispositif électronique à bord du véhicule (100), vers une position d'attente de fixation de panneau, dans laquelle le châssis avant (2) forme un angle avec la surface avant (1a) de l'unité principale (1) du dispositif électronique à bord du véhicule (100), la commande d'entraînement étant déclenchée pour incliner le châssis avant en démarrant l'alimentation en courant réalisée par l'unité d'alimentation en courant (6) ;
une unité de détection de fixation de panneau (8) qui détecte si ou non le panneau (3) est fixé sur le châssis avant (2), après que le châssis avant (2) a été incliné vers ou quand le châssis avant (2) est incliné vers la position d'attente de fixation de panneau par la commande d'entraînement réalisée par l'unité de commande d'entraînement (7) ; et
une unité de commande de démarrage (11) qui, dans le cas où l'unité de détection de fixation de panneau (8) a détecté que le panneau (3) est fixé sur le châssis avant (2), démarre l'unité principale (1) du dispositif électronique à bord du véhicule (100) et fait entrer le dispositif électronique à bord du véhicule (100) dans un état dans lequel l'unité principale (1) du dispositif électronique à bord du véhicule (100) est utilisable et qui, dans le cas où l'unité de détection de fixation de panneau (8) a détecté que le panneau (3) n'est pas fixé sur le châssis avant (2), met l'unité principale (1) du dispositif électronique à bord du véhicule (100) en attente jusqu'à ce que l'unité de détection de fixation de panneau (8) détecte que le panneau (3) a été fixé sur le châssis avant (2) auquel point l'unité principale (1) du dispositif électronique à bord du véhicule (100) démarre.

2. Dispositif électronique à bord du véhicule (100) selon la revendication 1, dans lequel l'angle est un angle préréglé, un angle formé quand le dispositif électronique à bord du véhicule (100) a été utilisé en dernier, ou un angle formé quand une fixation du panneau (3) a été réalisée en dernier.

3. Dispositif électronique à bord du véhicule (100) selon la revendication 1 ou 2, dans lequel l'unité d'alimentation en courant (6) démarre l'alimentation en courant lors de la détection d'au moins un de l'allumage d'un commutateur d'accessoire du véhicule, de l'ouverture d'une porte du véhicule, du déverrouillage d'une porte du véhicule, et de l'approche du véhicule d'un utilisateur.

4. Dispositif électronique à bord du véhicule (100) selon l'une quelconque des revendications 1 à 3, comprenant en outre une unité de génération d'avertissement (12) qui sort un avertissement pour prévenir un utilisateur de fixer le panneau (3) sur le châssis avant (2), l'avertissement étant constitué par un message vocal, un bip d'avertissement, ou les deux, dans le cas où il a été détecté que le panneau (3) n'est pas fixé sur le châssis avant (2) pendant une période prédéterminée de temps après que le châssis avant (2) a été incliné vers la position d'attente de fixation de panneau.

5. Procédé de commande d'actionnement pour un dispositif électronique à bord d'un véhicule (100) qui inclut un châssis avant (2) qui est agencé près d'une surface avant (1a) de l'unité principale (1) du dispositif électronique à bord du véhicule (100) de telle manière que le châssis avant (2) peut s'incliner et duquel et sur lequel un panneau (3) peut être détaché/attaché, et
un mécanisme d'entraînement (5) qui fait s'incliner le châssis avant (2) par rapport à la surface avant (1a) de l'unité principale (1) du dispositif électronique à bord du véhicule (100), le procédé de commande d'actionnement comprenant :
une première étape (ST1, ST2) de démarrage de l'alimentation en courant vers l'unité principale (1) du dispositif électronique à bord du véhicule (100) ; et de réalisation d'une commande d'entraînement sur le mécanisme d'entraînement de telle manière que le châssis avant (2) est incliné depuis une position initiale, dans laquelle le châssis avant (2) repose le long de la surface avant (1a) de l'unité principale (1) du dispositif électronique à bord du véhicule (100), vers une position d'attente de fixation de panneau, dans laquelle le châssis avant (2) forme un certain angle avec la surface avant (1a) de l'unité principale (1) du dispositif électronique à bord du véhicule (100), la commande d'entraînement étant déclenchée en démarrant l'alimentation en courant ;
une seconde étape (ST3) de détection de si ou non le panneau (3) est fixé sur le châssis avant (2), après que le châssis avant (2) a été incliné vers ou pendant que le châssis avant (2) est incliné vers la position d'attente de fixation de panneau dans la première étape (ST1, ST2) ;
dans le cas où il a été détecté que le panneau (3) est fixé sur le châssis avant (2) dans la seconde étape (ST3), une troisième étape (ST4) de démarrage de l'unité principale (1) du dispositif électronique à bord du véhicule (100) et faisant entrer le dispositif électronique à bord du véhicule (100) dans un état dans lequel l'unité principale (1) du dispositif électronique à bord du véhicule (100) est utilisable ; et
dans le cas où il a été détecté que le panneau (3) n'est pas fixé sur le châssis avant (2) dans la seconde étape (ST3), une quatrième étape (ST5, ST5', ST11) mettant l'unité principale (1) du dispositif électronique à bord du véhicule (100) en attente jusqu'à ce qu'il soit détecté que le panneau (3) a été fixé sur le châssis avant (2) auquel point l'unité principale (1) du dispositif électronique à bord du véhicule (100) démarre.

6. Le procédé de commande d'actionnement selon la revendication 5, dans lequel le certain angle est un angle préréglé, un angle formé quand le dispositif électronique à bord du véhicule (100) a été utilisé en dernier, ou un angle formé quand une fixation du panneau (3) a été réalisée en dernier.

7. Procédé de commande d'actionnement selon la revendication 5 or 6, dans lequel, dans la première étape, l'alimentation en courant est démarrée lors de la détection d'au moins un de l'allumage d'un commutateur d'accessoire du véhicule, de l'ouverture d'une porte du véhicule, du déverrouillage d'une porte du véhicule, et de l'approche du véhicule d'un utilisateur.

8. Le procédé de commande d'actionnement selon l'une quelconque des revendications 5 to 7, comprenant en outre une cinquième étape (ST7) de sortie d'un avertissement pour signaler à un utilisateur de fixer le panneau (3) sur le châssis avant (2), l'avertissement étant constitué par un message vocal, un bip d'avertissement, ou les deux, dans le cas où, dans la seconde étape (ST3) il a été détecté que le panneau (3) n'est pas fixé sur le châssis avant (2) pendant une période prédéterminée de temps après que le châssis avant (2) a été incliné vers la position d'attente de fixation de panneau.
